# EUROPÄISCHE PATENTSCHRIFT

(11) **EP 1 047 865 B1**
(45) Veröffentlichungstag und Bekanntmachung des Hinweises auf die Patenterteilung: **23.10.2002**
(21) Anmeldenummer: 99906105.4
(22) Anmeldetag: 07.01.1999
(51) Int. Cl.: F01N 3/28

(54) **WABENKÖRPERANORDNUNG MIT EINER MINDESTENS EINE METALLFOLIE ENTHALTENDEN ZWISCHENSCHICHT**
HONEYCOMB ARRANGEMENT WITH AN INTERMEDIATE LAYER CONTAINING AT LEAST ONE METAL FOIL
ENSEMBLE CORPS ALVEOLAIRE PRESENTANT UNE COUCHE INTERMEDIAIRE RENFERMANT AU MOINS UNE FEUILLE METALLIQUE

(30) Priorität: 13.01.1998 DE 19800926
(43) Veröffentlichungstag der Anmeldung: 02.11.2000
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP9900047
(87) Internationale Veröffentlichungsnummer: WO99036682

(56) Entgegenhaltungen:
- DE-A- 3 820 981
- DE-A- 3 827 863
- DE-A- 3 922 667
- DE-A- 4 236 883
- DE-U- 29 500 725
- Datenblatt Kerlan, 'HD-Matte, Katiss, Katiss A, Kalfeu, Kalfeu M', Publikation vor Aufkauf und Auflösung der Firma Kerlan 1996

## Beschreibung

Die vorliegende Erfindung betrifft eine Wabenkörperanordnung mit einem Gehäuse, in dem ein von einer Zwischenschicht umgebener Wabenkörper angeordnet ist, wobei die Zwischenschicht eine Mehrzahl von Lagen enthält. Solche Anordnungen werden besonders bei Abgasreinigungsanlagen von Kraftfahrzeugen eingesetzt, insbesondere für Katalysatoren mit keramischen Wabenkörpern.

Aus dem deutschen Gebrauchsmuster 80 19 813 ist bereits eine Halterung von keramischen Wabenkörpern bekannt, bei der der Wabenkörper in eine sogenannte Quellmatte eingehüllt und in einem Metallgehäuse untergebracht wird. Die Quellmatte ist in der Lage, durch unterschiedliches Verhalten von Gehäuse und Wabenkörper und durch Herstellungstoleranzen entstehende Hohlräume durch Quellen auszufüllen und so über einen langen Betriebszeitraum eine sichere Lagerung zu gewährleisten. Quellmatten enthalten meist Glimmerstückchen, die, sofern Platz in ihrer Umgebung vorhanden ist, Wasser aufnehmen und sich dabei ausdehnen. Zur Stabilisierung solcher Quellmatten wird in dem Gebrauchsmuster vorgeschlagen, eine gewellte Drahtgestrickmatte in die Quellmatte zu integrieren. Um die Quellmatte gegen Abtragen an den Stirnseiten des Wabenkörpers zu schützen, sollen Gasdichtringe an den Stirnseiten des Wabenkörpers zur Abdeckung des von der Quellmatte ausgefüllten Spaltes vorgesehen werden.

Da sich Wabenkörper in Abgasanlagen beim Betrieb auf 900 °C und mehr aufheizen und in der Nähe der Wabenkörperanordnung angeordnete Bauteile gegen diese hohe Temperatur geschützt werden sollen, ist es auch bekannt, zwischen Gehäuse und Wabenkörper eine thermisch isolierende Zwischenschicht vorzusehen.

Diese thermisch isolierende Schicht kann eine Luftschicht sein, die das Gehäuse aufgrund geringer Wärmeleitungs- und Wärmekonvektionseigenschaften der Luft gegen die in dem Wabenkörper bei Gebrauch der Wabenkörperanordnung auftretenden hohen Temperaturen isoliert.

Alternativ oder kumulativ zu der Luftschichtisolation ist es bekannt, eine aus einem keramischen Werkstoff bestehende Zwischenschicht vorzusehen. Auch hier liegt eine thermische Isolation des Gehäuses von dem Wabenkörper aufgrund geringer Wärmeleitungs- und Wärmekonvektionseigenschaften der vorgesehenen keramischen Werkstoffe vor. Da die oben erwähnten Quellmatten zur Halterung von Wabenkörpern bei sehr hoher Umgebungstemperatur von z.B. über 800 °C Wasser abgeben und dabei schrumpfen, wodurch sich der Wabenkörper im Gehäuse lockern kann, müssen Quellmatten bei bestimmten hochbelasteten Wabenkörperanordnungen gegen den Wabenkörper thermisch isoliert sein, wozu es bereits bekannt ist, den Wabenkörper zunächst mit einer thermischen Isolierung zu versehen und dann erst mit einer Quellmatte zu umgeben.

Bei Temperaturen oberhalb von etwa 600 °C jedoch erfolgt eine Wärmeübertragung nicht nur durch Wärmeleitung und Wärmekonvektion, sondern ebenfalls und mit der Temperatur stark zunehmend durch Wärmestrahlung. Gegen diese jedoch isolieren die aus dem Stand der Technik bekannten, zuvor beschriebenen thermischen Isolierungen und auch Quellmatten nur wenig.

Ein weiterer Nachteil bekannter Wabenkörperanordnungen ist, daß die zwischen dem Gehäuse und dem Wabenkörper angeordneten, isolierenden Zwischenschichten im Bereich der Stirnseiten der Wabenkörperanordnung durch heiße, pulsierende Abgase abgetragen werden. Aufgrund der pulsierenden Abgasströmung wird selbst eine an sich sehr abrasionsfeste keramische Zwischenschicht im Laufe des Betriebes abgetragen, so daß die thermische Isolation zwischen Wabenkörper und Gehäuse im Laufe der Betriebszeit der Wabenkörperanordnung in nachteiliger Weise beschädigt oder zerstört wird. Hiermit ist eine Beschädigung und gegebenenfalls sogar eine Zerstörung der gesamten Wabenkörperanordnung verbunden.

Ein weiteres Konzept betreffend die Reduzierung von Wärmeübergängen von einem heißen Wabenkörper hin zur kühlen Umgebung geht beispielsweise aus den Dokumenten DE 39 22 667 A1 oder DE 42 36 883 A1 hervor. Dort werden Halterungen insbesondere für keramische Monolithen vorgeschlagen, welche mittels eines Drahtgestrickes gelagert sind. Die Abgasleitung ist dabei doppelwandig ausgeführt, wobei zwischen einer Innenschale und einer Außenschale der Abgasleitung eine Isoliermatte vorgesehen ist, welche bevorzugt keramisches Fasermaterial umfasst. Demnach wird die thermische Isolierung im wesentlichen außerhalb des Abgasstromes bzw. der Abgasleitung durchgeführt. Dies hat gerade im Hinblick auf die Nachrüstbarkeit und/oder die Montage einen erhöhten technischen und kostenintensiven Aufwand zur Folge.

Im Hinblick auf die Reduktion von Auflösungserscheinungen der Quellmatten geht beispielsweise aus der DE 295 00 725 U1 einer Quellmatten-Konstruktion hervor, wobei ein Blechteil zwischen dem Mantelgehäuse und dem Wabenkörper angeordnet ist, welches eine Vielzahl von in die Quellmatte eindringende Stege aufweist. Diese Stege dienen der Verklammerung des Quellmattenmaterials und wirken weiterhin als eine Art Labyrinthdichtung, um ein Durchströmen des Abgases durch die Quellmatte zu reduzieren. Diese Blechteile sind bevorzugt flächig bzw. fleckenartig ausgebildet und am Umfang der Quellmatte verteilt angeordnet. Im Hinblick auf eine thermische Isolierung des Wabenkörpers wird ggf. ein Hitzeschild vorgeschlagen, welches außen auf das Mantelgehäuse aufgebracht sein kann.

Demgegenüber liegt der Erfindung die Aufgabe zugrunde, eine Wabenkörperanordnung zu schaffen, welche eine Wärmeübertragung mittels Wärmestrahlung von dem Wabenkörper auf das Gehäuse oder eine Quellmatte verringert und vorzugsweise auch eine Abtragung der Zwischenschicht verhindert oder zumindest verringert.

Diese Aufgabe wird durch eine Wabenkörperanordnung gemäß Patentanspruch 1 gelöst. Vorteilhafte Ausgestaltungen und Weiterbildungen sind in den jeweils abhängigen Ansprüchen beschrieben.

Indem die Zwischenschicht erfindungsgemäß eine Mehrzahl von Lagen enthält, die mindestens eine Metallfolie enthalten, wird in vorteilhafter Weise eine Wärmeübertragung von dem Wabenkörper auf das Gehäuse mittels Wärmestrahlung verringert. Die Wabenkörperanordnung weist ebenfalls gute thermische Isolationseigenschaften hinsichtlich Wärmeleitung und Wärmekonvektion auf, da erfindungsgemäß eine Mehrzahl von Lagen vorgesehen sind, die auch mindestens eine Schicht aus keramischen Material aufweist. Dies gilt insbesondere dann, wenn das keramische Material eine sehr geringe Wärmeleitfähigkeit aufweist.

Dabei deckt die mindestens eine Metallfolie an mindestens einer Stirnseite des Wabenkörpers eine benachbarte keramische Schicht stirnseitig ab. Hierdurch wird ein besonders wirksamer Schutz gegen insbesondere pulsierende, in die Wabenkörperanordnung einströmende heiße zu reinigende Abgase geschaffen, da diese die keramische Schicht nicht mehr direkt anströmen können und somit eine Abtragung derselben ausgeschlossen ist.

Etwaige in der Wabenkörperanordnung zwischen dem Gehäuse und dem Wabenkörper bei der Herstellung verbleibende oder sich beim Betrieb bildende Hohlräume werden in vorteilhafter Weise geschlossen, wenn mindestens eine der Lagen aus keramischem Material eine Quellmatte ist, welche bei Aufnahme von Wasser ihr benachbarte Hohlräume durch Quellen schließt. Dies bewirkt eine dauerhafte feste Halterung des Wabenkörpers.

Eine herstellungstechnisch gesehen vorteilhafte Ausgestaltung der Zwischenschicht liegt ebenfalls vor, da die Ausbildung einer Lage als Metallfolie es ermöglicht, daß die Wabenkörperanordnung auf einfache Art und Weise insbesondere durch Wickeln hergestellt werden kann. Insbesondere wenn die mindestens eine Metallfolie und mindestens eine keramische Schicht zu einer Sandwichstruktur verbunden sind, kann die Zwischenschicht auf einfache Art und Weise in Umfangsrichtung um den Wabenkörper gewickelt werden, und zwar vorzugsweise mindestens einmal oder bei höheren Anforderungen an die Isolierung auch mehrfach. Auch eine Herstellung von vorgeformten Halbschalen in Sandwichstruktur ist möglich.

Die Metallfolien und die gegebenenfalls mit ihnen verbundenen keramischen Schichten weisen in vorteilhafter Weise eine Strukturierung, insbesondere Wellung auf. Damit wird in vorteilhafter Weise ermöglicht, daß die Metallfolien mit geringen Kräften in Umfangsrichtung des Wabenkörpers biegbar sind.

Weitere Merkmale, Vorteile und Ausgestaltungen der vorliegenden Erfindung werden in der folgenden Beschreibung anhand der Zeichnung beschrieben. In der nicht maßstabsgerechten Zeichnung zeigen:
- Fig. 1: eine erste Ausführungsform der vorliegenden Erfindung in perspektivischer, teilweise geschnittener Ansicht schräg auf eine Stirnseite,
- Fig. 2: einen Ausschnitt der in Fig. 1 gezeigten Ausführungsform im Längsschnitt,
- Fig. 3: eine weitere Ausführungsform im Längsschnitt im Bereich einer Stirnseite der Wabenkörperanordnung,
- Fig. 4: eine erfindungsgemäße Sandwichstruktur in teilweise geschnittener perspektivischer Darstellung und
- Fig. 5: eine gewellte erfindungsgemäße Sandwichstruktur in teilweise geschnittener perspektivischer Darstellung.

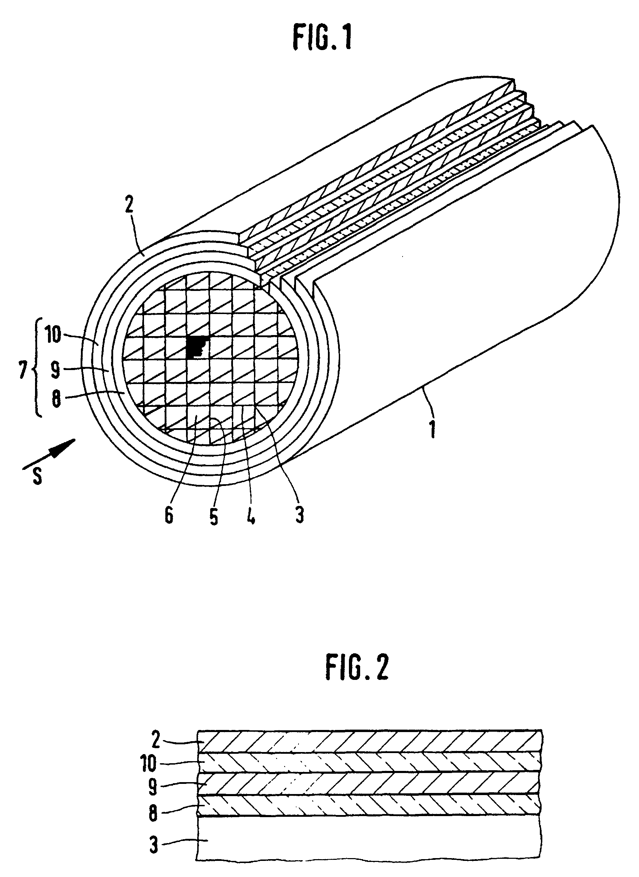

Fig. 1 zeigt in schematischer, nicht maßstabgerechter, perspektivischer, teilweise geschnittener Ansicht eine erfindungsgemäße Wabenkörperanordnung 1. Der Wabenkörper 3 weist durch Trennwände 4, 5 voneinander getrennte Kanäle 6 auf, durch die ein Fluid, vorzugsweise das Abgas einer Verbrennungskraftmaschine, in einer Strömungsrichtung S strömen kann. Bei dem Wabenkörper handelt es sich vorzugsweise um einen extrudierten keramischen Wabenkörper, insbesondere einen aus sogenannter Dünnwandkeramik. Solche keramischen Wabenkörper, aber auch aus dünnen Metallblechen aufgebaute Wabenkörper müssen haltbar in einem Mantelrohr 2 gehaltert werden, wobei zusätzlich eine thermische Isolierung gegenüber dem Mantelrohr angestrebt wird. Bei dem vorliegenden Ausführungsbeispiel wird diese Halterung und Isolierung durch eine thermisch isolierende Lage 8 aus keramischem Material, eine Metallfolie 9 und eine weitere Lage aus keramischem Material 10, vorzugsweise eine Quellmatte, erreicht. Diese drei Lagen bilden zusammen eine Zwischenschicht 7, welche einerseits den Wabenkörper sicher im Mantelrohr 2 hält und andererseits eine sehr gute thermische Isolierung bewirkt. Die thermisch isolierende Lage 8 verhindert zunächst Wärmeleitung und Konvektion vom Wabenkörper auf die Metallfolie 9. Die Metallfolie 9 wirkt außerdem als Strahlungsschild gegen Wärmestrahlung, so daß schon die Lage 10 aus keramischem Material beim Betrieh der Wabenkörperanordnung in einer Ahgasanlage eines Kraftfahrzeuges auf erheblich niedrigerer Temperatur liegt als der Wabenkörper 3 selbst. Dies erlaubt auch bei Verwendung einer Quellmatte als Lage 10 aus keramischem Material sehr hohe Betriebstemperaturen der Wabenkörperanordnung, wie sie beispielsweise bei dicht am Auslaß eines Verbrennungsmotors angeordneten Abgasreinigungsvorrichtungen, insbesondere katalytischen Konvertern, auftreten. Es sei darauf hingewiesen, daß das Gehäuse 2 im allgemeinen eine Dicke von 0,5 bis 1 mm aufweist, während die Metallfolie 9 bevorzugt eine sehr dünne Folie ist, insbesondere mit einer Dicke kleiner 50 µ, vorzugsweise sogar kleiner 30 µ. Die Metallfolie 9 sollte insbesondere aus einem hochtemperaturkorrosionsfesten Material bestehen, insbesondere einem chrom- und aluminiumhaltigen Stahl. Die Lagen 8, 10 aus keramischem Material sind typischerweise Fasermatten, wie sie aus dem Stand der Technik zur Halterung von keramischen Wabenkörpern bekannt sind, mit einer Dicke, wie sie zum Ausgleich von Fertigungstoleranzen des Gehäuses 2 und des Wabenkörpers 3 und zur sicheren Halterung über einen langen Betriebszeitraum erforderlich sind. Es sei auch darauf hingewiesen, daß zur Verbesserung der Isolierung gegen Wärmestrahlung mehrere Metallfolien und mehrere Lagen aus keramischem Material vorgesehen werden können, die radial aufeinanderfolgen.

Fig. 2 veranschaulicht nochmals den radialen Aufbau einer einfachen erfindungsgemäßen Wabenkörperanordnung anhand eines Ausschnittes aus einem Längsschnitt durch die Wabenkörperanordnung. Es folgen von innen nach außen aufeinander der Wabenkörper 3, eine thermisch isolierende Lage 8 aus keramischem Material, eine Metallfolie 9, eine Quellmatte 10 und ein Gehäuse 2.

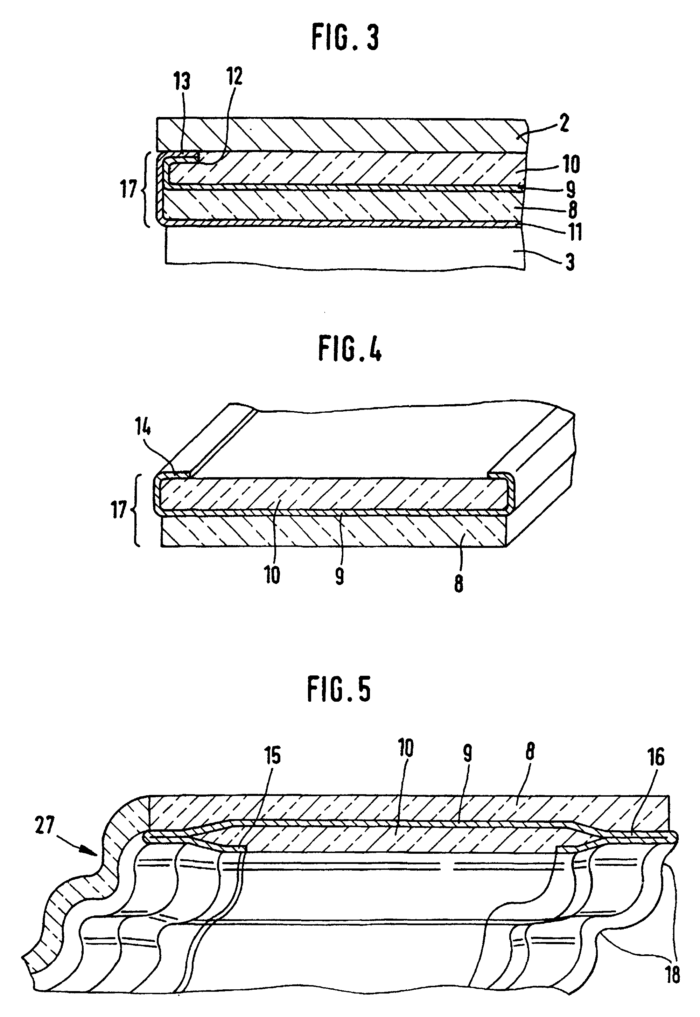

Fig. 3 zeigt ein bevorzugtes Ausführungsbeispiel der Erfindung im Bereich einer Stirnseite eines Wabenkörpers anhand eines Teils eines Längsschnittes durch eine Wabenkörperanordnung. Da bekanntermaßen pulsierende heiße Abgase keramische Materialien, insbesondere Fasermatten, Quellmatten und dergleichen abtragen können, sollte an einer oder vorzugsweise beiden Stirnseiten der erfindungsgemäßen Wabenkörperanordnung ein Schutz hiergegen vorgesehen werden. Dies kann wie bei herkömmlichen Anordnungen durch einen Schutzring oder eine Stufe im Gehäuse erreicht werden. Erfindungsgemäß gibt es jedoch eine andere sehr günstige Lösung, nämlich die Metallfolie(n) als stirnseitigen Schutz um benachbarte Lagen aus keramischem Material zu falten. Im Ausführungsbeispiel der Fig. 3 ist zunächst um den Wabenkörper 3 eine Metallfolie 11 gewickelt, um die herum eine keramische Lage 8, dann wieder eine Metallfolie 9 und dann eine weitere Lage 10 aus keramischem Material angeordnet sind. Erfmdungsgemäß sind dabei die Enden 12, 13 der Metallfolien 9, 11 um die jeweils angrenzenden keramischen Lagen 8, 10 gefaltet. Eine solche Konfiguration kann im einfachsten Falle dadurch hergestellt werden, daß zunächst stirnseitig über die Lagen 8, 10 aus keramischem Material überstehende Metallfolien 9, 11 um den Wabenkörper 3 gewickelt werden, wobei dann anschließend die überstehenden Enden 12, 13 mit einem geeigneten Werkzeug um die Lagen aus keramischem Material 8, 10 gefaltet werden. Dabei kann die Faltung so erfolgen, wie in den vorliegenden Ausführungsbeispielen dargestellt, daß die Enden 12, 13 der Metallfolien 9, 11 unter das Gehäuse 2 gefaltet werden. Es ist aber auch eine Einbindung der Enden 12, 13 in eine Schweißnaht zur Verbindung des Gehäuses 2 mit einem angrenzenden Abgassystem möglich.

Besonders günstig für die Herstellung erfindungsgemäßer Wabenkörperanordnung ist es, wenn die als Zwischenschicht 7 verwendeten Lagen in einer Sandwichstruktur 17 bzw. 27 vorgefertigt werden.

Ein Ausführungsbeispiel hierzu ist in Fig. 4 dargestellt. An einer Seite einer Metallfolie 9 ist dabei eine thermisch isolierende Lage 8 aus keramischem Material angeordnet, beispielsweise angeklebt. Auf der anderen Seite der Metallfolie 9 ist eine Quellmatte angeordnet, wobei die Enden 14 der Metallfolie 9 um die Quellmatte 10 gefaltet sind. Eine solche Anordnung kann um einen Wabenkörper gewickelt oder schon in zylindrischer oder ovaler Form vorgefertigt werden. Sofern die thermisch isolierende Lage 8 aus langen Keramikfasern besteht, ist sie gegen Abtragung durch pulsierendes Abgas nicht sehr anfällig, so daß der Schutz der Quellmatte 10 durch die umgefalteten Enden 14 der Metallfolie 9 ausreicht.

Fig. 5 zeigt eine Möglichkeit, wie eine Sandwichstruktur mit an den Enden 15 umgefalteten Metallfolien 9 gestaltet werden kann, um die Flexibilität beim Wickeln um einen beispielsweise zylindrischen Körper zu verbessern. Obwohl es sich bei der Metallfolie 9 um eine sehr dünne Folie handelt, wird eine daraus gebildete Sandwichstruktur mit umgefalteten Enden relativ steif. Um wieder eine Flexibilität herzustellen kann die gesamte Sandwichstruktur durch eine Wellwalzenanordnung strukturiert werden, wodurch Wellungen 18 entstehen, die in Fig. 5 allerdings stark übertrieben dargestellt sind. Eine sehr flach verlaufende Wellung ist zur Herstellung der Flexibilität ausreichend. Die umgefalteten Enden 15 der Metallfolie 9 werden dabei in einem Endabschnitt 16 flachgequetscht. Die zu der Sandwichstruktur 27 gehörende Lage 8 aus keramischem Material und die im Inneren der Metallfolie 9 angeordnete Quellmatte 10 bewirken, daß trotz der geringen Wellung 18 der Sandwichstruktur 27 keine für Abgas durchlässigen Kanäle außerhalb des Wabenkörpers 3 entstehen.

Die vorliegende Erfindung eignet sich besonders für Wabenkörperanordnungen für Abgaskatalysatoren im motornahen Bereich von Kraftfahrzeugen. Dabei ermöglicht sie eine sichere Lagerung von metallischen oder keramischen Wabenkörpern mit besonders dünnen Wänden und bewirkt gleichzeitig eine gute thermische Isolierung eines Wabenkörpers gegenüber seinem Gehäuse. Bevorzugtes Anwendungsgebiet sind Wabenkörperanordnungen hir keramische Wabenkörper aus sogenannter Dünnwandkeramik mit Wanddicken unter 100 µ, vorzugsweise unter 50 µ.

### Bezugszeichenliste

- 1: Wabenkörperanordnung
- 2: Gehäuse
- 3: Wabenkörper
- 4, 5: Trennwände
- 6: Kanäle
- 7: Zwischenschicht
- 8: thermisch isolierende Lage aus keramischem Material
- 9: Metallfolie
- 10: Lage aus keramischem Material, Quellmatte
- 11: Metallfolie
- 12, 14: umgefaltetes Ende der Metallfolie 9
- 13: umgefaltetes Ende der Metallfolie 11
- 15: umgefaltetes Ende der Metallfolie 9 in der gewellten Sandwichstruktur 27
- 16: platt gequetschtes Ende der Sandwichstruktur 27
- 17, 27: Sandwichstruktur
- 18: Wellung

- S: Strömungsrichtung

## Patentansprüche

1. Wabenkörperanordnung (1) mit einem Gehäuse (2), in dem ein von einer Zwischenschicht (7) umgebener Wabenkörper (3) angeordnet ist, wobei die Zwischenschicht (7) eine Mehrzahl von Lagen (8, 9, 10) enthält, die aus mindestens einer Metallfolie (9; 11) und mindestens einer Schicht (8; 10) aus keramischem Material gebildet sind, **dadurch gekennzeichnet, daß** mindestens eine Metallfolie (9; 11) an mindestens einer Stirnseite des Wabenkörpers (3) so umgeformt (12; 13; 14; 15) ist, daß sie mindestens eine benachbarte Schicht (10; 8) aus keramischem Material stirnseitig abdeckt und stirnseitig um eine benachbarte Schicht (10; 8) aus keramischem Material herumgefaltet (12; 13; 14; 15) ist.

2. Wabenkörperanordnung (1) nach Anspruch 1, wobei die Zwischenschicht (7) mindestens eine Lage aus Metallfolie (9; 11) und mindestens zwei Lagen (8, 10) aus keramischem Material enthält.

3. Wabenkörperanordnung (1) nach Anspruch 1 oder 2, wobei mindestens eine der Lagen (8, 10) aus keramischem Material eine Quellmatte (10) ist, welche bei Aufnahme von Wasser benachbarte Hohlräume durch Quellen schließen kann.

4. Wabenkörperanordnung (1) nach Anspruch 1, 2 oder 3, wobei mindestens eine der Lagen (8) aus keramischem Material eine sehr geringe Wärmeleitfähigkeit aufweist.

5. Wabenkörperanordnung (1) nach einem der vorhergehenden Ansprüche, wobei die Lagen (8, 10) aus keramischem Material aus mindestens einer Fasermatte gebildet sind.

6. Wabenkörperanordnung (1) nach einem der vorhergehenden Ansprüche, wobei mindestens eine Metallfolie (9; 11) und mindestens eine Schicht (8; 10) aus keramischem Material zu einer Sandwichstruktur (17; 27) verbunden sind, die vorzugsweise mindestens einmal in Umfangsrichtung um den Wabenkörper (3) gewikelt ist.

7. Wabenkörperanordnung (1) nach Anspruch 6, wobei die Sandwichstruktur (17) mindestens enthält: eine thermisch gut isolierende keramische Schicht (8), eine Metallfolie (9; 11)) und eine Quellmatte (10), vorzugsweise von innen nach außen in dieser Reihenfolge.

8. Wabenkörperanordnung (1) nach einem der vorhergehenden Ansprüche, wobei alle Metallfolien (9; 11), einschließlich ihrer gegebenenfalls umgeformten Bereiche (12; 13; 14; 15) und aller mit den Metallfolien (9; 11) gegebenenfalls zu einer Sandwichstruktur (17; 27) verbundenen Schichten (9, 10)aus keramischem Material, mit einer solchen Strukturierung (17), insbesondere einer Wellung (18), versehen sind, daß die Metallfolien (9; 11) mit geringen Kräften in Umfangsrichtung des Wabenkörpers (3) biegbar sind.

## Claims

1. A honeycomb body arrangement (1) having a housing (2), in which a honeycomb body (3) surrounded by an intermediate layer (7) is arranged, wherein the intermediate layer (7) contains a plurality of layer portions (8, 9, 10) which are formed from at least one metal sheet (9; 11) and at least one layer (8; 10) of ceramic material, **characterized in that** at least one metal sheet (9; 11) is transformed (12; 13; 14; 15) in such a way that at least one end face of the honeycomb body (3) that it covers at least one adjacent layer (10; 8) of ceramic material at the end face and is folded (12; 13; 14; 15) at the end face around an adjacent layer (10; 8) of ceramic material.

2. A honeycomb body arrangement (1) according to claim 1, wherein the intermediate layer (7) includes at least one layer of metal sheet (9; 11) and at least two layers (8, 10) of ceramic material.

3. A honeycomb body arrangement (1) according to claim 1 or claim 2, wherein at least one of the layers (8, 10) of ceramic material is a swell mat (10) which upon absorbing water can close adjacent cavities by swelling.

4. A honeycomb body arrangement (1) according to claim 1, 2 or claim 3, wherein at least one of the layers (8) of ceramic material has a very low heat conductivity.

5. A honeycomb body arrangement (1) according to one of the preceding claims, wherein the layers (8, 10) of ceramic material are formed from at least one fibre mat.

6. A honeycomb body arrangement (1) according to one of the preceding claims, wherein at least one metal sheet (9; 11) and at least one layer (8; 10) of ceramic material are joined to form a sandwich structure (17; 27) which is preferably wound at least once in the peripheral direction around the honeycomb body (3).

7. A honeycomb body arrangement (1) according to claim 6, wherein the sandwich structure (17) includes at least: a ceramic layer (8) which is a good thermal insulator, a metal sheet (9; 11) and a swell mat (10), preferably from the inside outwardly in that sequence.

8. A honeycomb body arrangement (1) according to one of the preceding claims, wherein all metal sheets (9; 11) including their eventually transformed regions (12; 13; 14; 15) and all layers (9, 10) of ceramic material which are possibly joined to the metal sheets (9; 11) to form a sandwich structure (17; 27) are provided with such a structuring (17), in particular a corrugation (18), that the metal sheets (9; 11) are bendable with low levels of force in the peripheral direction of the honeycomb body (3).

## Revendications

1. Ensemble de corps alvéolaire (1) avec un boîtier (2), dans lequel est agencé un corps alvéolaire (3) entouré d'une couche intermédiaire (7), la couche intermédiaire (7) comportant une pluralité de couches (8, 9, 10) qui sont formées d'au moins une feuille métallique (9 ; 11) et d'au moins une couche (8 ; 10) en matériau céramique, **caractérisé en ce qu'**au moins une feuille métallique (9 ; 11) sur au moins une face frontale du corps alvéolaire (3) est transformée (12 ; 13 ; 14 ; 15) de telle manière qu'elle recouvre frontalement au moins une couche adjacente (10 ; 8) en matériau céramique et qu'elle est pliée frontalement autour d'une couche adjacente (10 ; 8) en matériau céramique (12 ; 13 ; 14 ; 15).

2. Ensemble de corps alvéolaire (1) selon la revendication 1, dans quel cas la couche intermédiaire (7) comporte au moins une couche de feuille métallique (9 ; 11) et au moins deux couches (8, 10) en matériau céramique.

3. Ensemble de corps alvéolaire (1) selon la revendication 1 ou 2, dans quel cas au moins une des couches (8, 10) en matériau céramique est une natte gonflante (10) qui dans le cas d'absorption d'eau peut fermer des cavités adjacentes par gonflement.

4. Ensemble de corps alvéolaire (1) selon la revendication 1, 2 ou 3, dans quel cas au moins une des couches (8) en matériau céramique a une conductibilité thermique très faible.

5. Ensemble de corps alvéolaire (1) selon l'une des revendications précédentes, dans quel cas les couches (8, 10) en matériau céramique sont formées d'au moins une natte de fibre.

6. Ensemble de corps alvéolaire (1) selon l'une des revendications précédentes, dans quel cas au moins une feuille métallique (9 ; 11) et au moins une couche (8 ; 10) en matériau céramique sont reliées en une structure sandwich (17 ; 27), qui est de préférence enroulée au moins une fois en direction périphérique autour du corps alvéolaire (3).

7. Ensemble de corps alvéolaire (1) selon la revendication 6, dans quel cas la structure sandwich (17) comprend au moins : une couche céramique (8) à bonne isolation thermique, une feuille métallique (9 ; 11) et une natte gonflante (10), de préférence de l'intérieur vers l'extérieur, dans cet ordre.

8. Ensemble de corps alvéolaire (1) selon l'une des revendications précédentes, dans quel cas toutes les feuilles métalliques (9; 11), y compris leurs zones transformées le cas échéant (12 ; 13 ; 14 ; 15) et toutes les couches (9, 10) en matériau céramique reliées le cas échéant en une structure sandwich (17 ; 27) avec les feuilles métalliques (9 ; 11), sont dotées d'une telle structuration (17), notamment d'une ondulation (18), qu'avec peu de forces les feuilles métalliques (9 ; 11) peuvent être fléchies en direction périphérique du corps alvéolaire (3).
